# EUROPEAN PATENT SPECIFICATION

(11) **EP 1 368 155 B1**
(45) Date of publication and mention of the grant of the patent: **12.05.2004**
(21) Application number: 02703836.3
(22) Date of filing: 06.02.2002
(51) Int. Cl.: B23Q 1/60, B23Q 15/24, B27M 1/08, B23Q 35/12

(54) **MACHINE TOOL FOR THE WORKING OF SINGLE PANELS OF WOOD AND WOOD SUBSTITUTES, BY MEANS OF MULTIPLE, ROTATING CHIP-REMOVAL TOOLS ON AN AXIS ORTHOGONAL TO THE SURFACE OF THE PANEL TO BE WORKED AND A SENSOR DEVICE FOR TRACING THE SURFACE OF THE PANEL**
WERKZEUGMASCHINE ZUR BEARBEITUNG VON HOLZPLATTEN MIT VERSTELLBAREM OBERFLÄCHESENSOR
MACHINE-OUTIL SERVANT A L'USINAGE DE PANNEAUX SIMPLES DE BOIS OU DE SUBSTITUTS UTILISANT DES OUTILS TOURNANTS D'ENLEVAGE DE COPEAUX PLACES SUR UN AXE PERPENDICULAIRE A LA SURFACE DU PANNEAU A USINER ET DETECTEURS TRACANT LA SURFACE DU PANNEAU

(30) Priority: 16.03.2001 IT AD20010054 U
(43) Date of publication of application: 10.12.2003
(73) Proprietor: Multiax S.R.L., 133070 Maron Di Brugnera (IT)
(72) Inventor: NASCIMBEN, Marco, I-33070 Maron Di Brugnera (IT)
(74) Representative: D'Agostini, Giovanni, Dr.
(86) International application number: PCT/IT2002/000070
(87) International publication number: WO 2002/074486

(56) References cited:
- EP-A- 0 470 425
- EP-A- 0 722 808
- DE-C- 19 913 696
- US-A- 5 299 609
- PATENT ABSTRACTS OF JAPAN vol. 1995, no. 01, 28 February 1995 (1995-02-28) -& JP 06 285807 A (MARUNAKA TEKKOSHO:KK), 11 October 1994 (1994-10-11)
- PATENT ABSTRACTS OF JAPAN vol. 010, no. 047 (M-456), 25 February 1986 (1986-02-25) -& JP 60 197348 A (HEIAN TEKKOSHO:KK), 5 October 1985 (1985-10-05)
- PATENT ABSTRACTS OF JAPAN vol. 1995, no. 09, 31 October 1995 (1995-10-31) -& JP 07 164402 A (HEIAN CORP), 27 June 1995 (1995-06-27)

## Description

The object of this invention is a machine tool for the working of single panels of wood and wood substitutes, by means of multiple, rotating chip-removal tools on an axis orthogonal to the surface of the panel to be worked and a sensor device for copying the surface of the panel, according to the description in the main claim.

### Technical Field

The patent is applied preferably, but not necessarily exclusively, to the working of panels such as cupboard doors, frames etc., with axial, head-mounted milling tools in order to cut (mill) a surface according to a set path, following the thickness of the panel by means of a sensing device.

### Background Art

According to the current state of the art, the technique of the working of panels, as above, by means of a machine tool with a multitude of rotating vertical milling tools and with a sensor which, when in use, is regulated either manually or by a motorised drive according to the milling tool to be used, is well known.

Only for complete different purposes, interesting preventing cutting wastage developed by the cutting tool the JP06285807 A (MARUNAKA TEKKOSHO:KK) 11 Oct. 1994 discloses a working method with a working machine such as a numerically controlled router or the like performed by moving a head against a table through numerical controlling with an abutting protection providing inside a fluid injection to prevent wasting material to obstacle the cutting tool. The rear surface of the material to be worked is placed on the table and the working is performed taking the front side surface of the material to be worked as the vertical basis of numerical controlling. At the portion which faces the table 3, of the head 5 slidably mounted on a main body 4, an abutting part 16, a cutting part 15 and a fluid
delivery port are provided so as to deliver fluid from the fluid delivery port against the material to be worked in order to prevent cutting wastage developed by the cutting part 15 from entering between the material to be worked and the abutting part 16.

### Drawbacks

The drawback of this type of operation is the extreme difficulty in aligning the sensing devices.
As a result, there is the problem that one of the tools may start cutting the piece before one of the others which leads to irregularities, not only with the start and finish points, but also with the depth of the cut.
Whatever the irregularity, the quality of the work will be compromised. Since the cutting tools vary in sharpness, wear or positioning errors in the various conical tool-holders, the sensing devices are lowered or raised in order to adjust the error. This does not solve the problem in a rational manner, however, because if the position of the sensing devices is regulated, the position of the cutting tools and, consequently, of the tool-holders will be regulated badly.
As a result, the time required for calibration will be even more penalised.

There are also machine tools in which the tool-holders are regulated with respect to the sensing device, but in which the sensing device is mounted laterally and is not very functional, thus unreliable from a quality point of view.

### Object of the Invention

The object of this invention is to overcome the aforementioned limitations.

### Description of the Invention

The problem is solved as claimed by means of the characteristics described in the main claim.

The advantage is that it is very simple and quick to guarantee the level of all of the sensors being used, and their respective cutting tools.

According to the characteristics described in the secondary claims, the system, the mechanism and the machine tool are optimised, are more efficient, more compact and more reliable.

### Description of an Application of the Invention

These and other advantages, with the aid of the attached drawings, will be outlined in the following description of a typical application of the system, the particulars of which are to be considered an example and not a limitation.

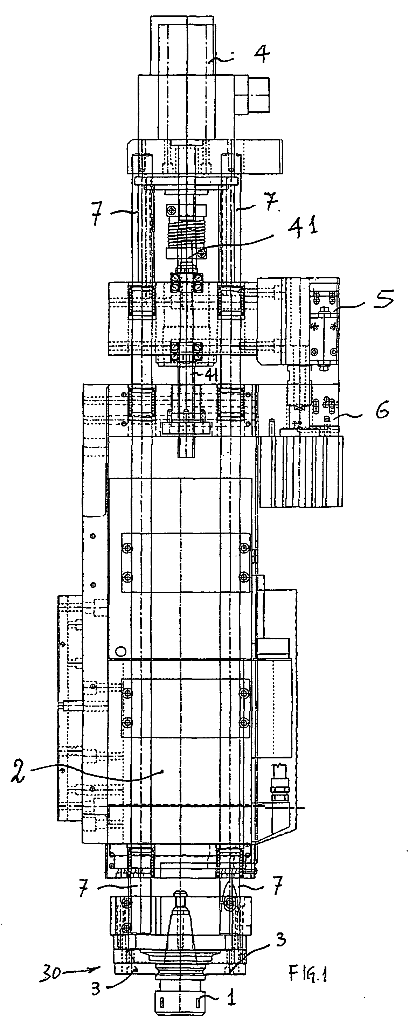

Figs. 1 and 1A are schematic side views of the head assembly (GO).
Figs. 2 and 3 are schematic front views of two head assemblies (GO), in position for the set-up phase above the work bed for the respective pair of panels (P) to be worked and in operation on the panels.

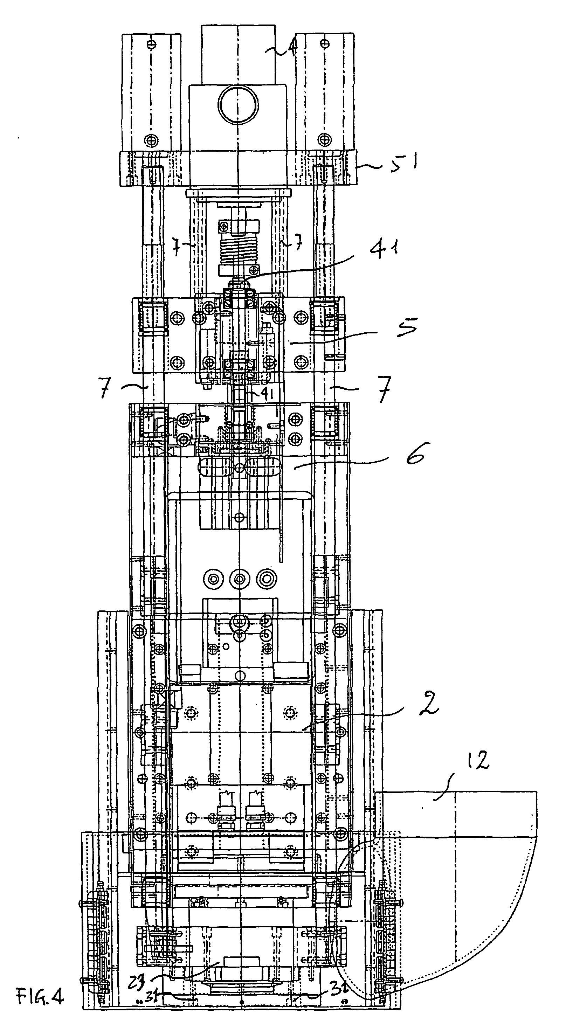

Figs. 4 and 4A are two schematic front views of the aforementioned head assembly (GO).

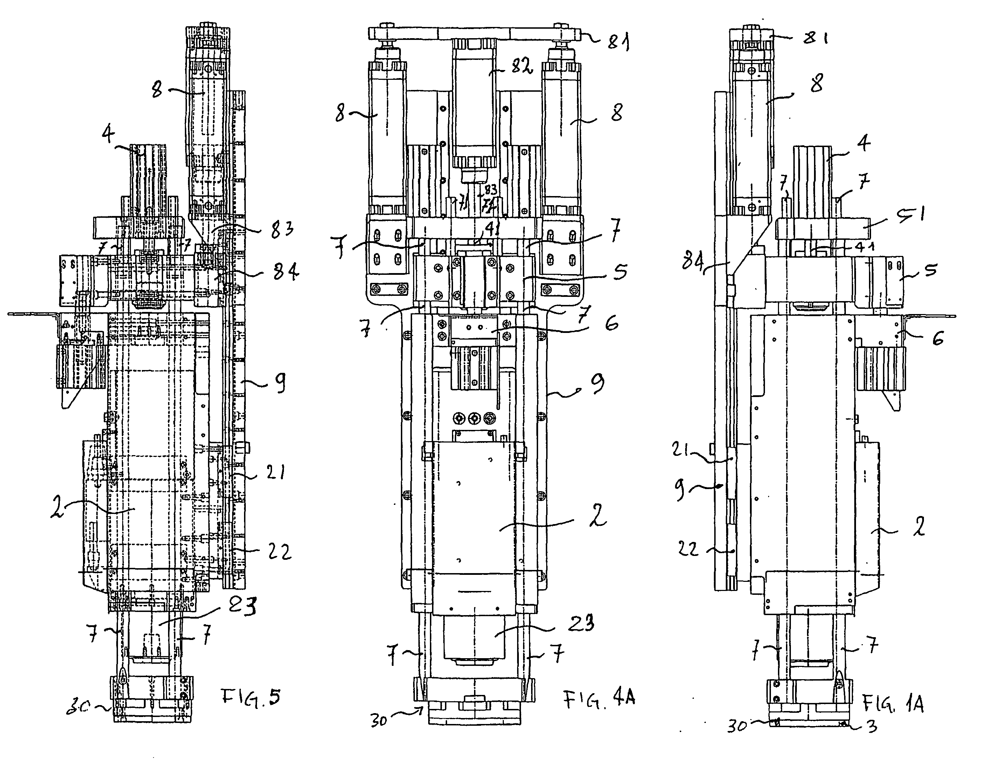

Fig. 5 is a view of the assembly from the opposite side with respect to that shown in fig. 1A.

As claimed, the invention regards a machine tool used to work panels of wood and wood substitutes (P) by means of rotating chip-removal tools on an axis which is orthogonal to the surface of the panel to be worked (P), which has:
- a series of heads (GO) with a vertical cutting tool, with each head having a support and drive means (2) connected to a tool-holder head (1) in order to rotate the cutting tool which is used to work the panel (P), together with a means for tracing the surface to be worked (3);
- means for synchronised, parallel movement of the said cutting heads (GO) with respect to the panel (P) to be worked;
- means for axial movement of the said tool-holder heads (1) and tracing
- means (3), orthogonal with respect to the panels to be worked (P);
- the said tool-holder head (I) and respective support means (2-6) which may be adjusted axially with respect to the tracing means (5, 7, 30, 3), in order to position all of them perfectly level (Z) by means of independent adjustment (4, 41) during the set-up phase before starting the work cycle (Z) and also during or after the work cycle, by varying their position with respect to each other (1, 3).

Each of the said heads (GO) includes two sub-units which are positioned axially on a plate-type support and vertical guide (9), an upper tracer-holder unit (5-7-3-30) and a lower (6, 2) tool-holder unit (1) which, by means of a worm screw (4-41), means that they may be moved closer or further apart from each other with micrometric precision.

The advantages are:
- the said upper sub-unit (5) may be moved vertically by means of vertical movement means (8, 82, 83);
- the said upper sub-unit holds the said drive means with the micrometric axial worm-screw regulator (4, 41) of the said lower sub-unit (6, 2) to move it closer together or further away, and holds guide rods (7) which pass through the said lower sub-unit (2) and fit in to the support (30) for the said tracing means (3), located below the said lower sub-unit (2);
- the said tool-holder and tool head (1) is guided and passes through the said support for the lower sensor means (3) so that:

- when the said vertical movement means (8, 82, 83) is operated, the entire unit with the said tool-holder and tool head (1) and the said sensors (3) is moved for the work cycle.

Going further into detail, the operative unit is mounted on plate 9 with the two sub-units 5 and 6-2 on carriages 84 and 21-22 respectively.

The support for the vertical movement includes the alternative control
means 8, 81, 82, 83 which act upon the lower sub-unit 5 and on support 51 which, in turn, supports motor 4 for the micrometric regulator screw (41), all of which are guided by guide rods 7 which support plate 30 for the sensors 3 at their lower end.

The mandrill is indicated by 23, and is regulated by being raised and lowered within the guides 7.

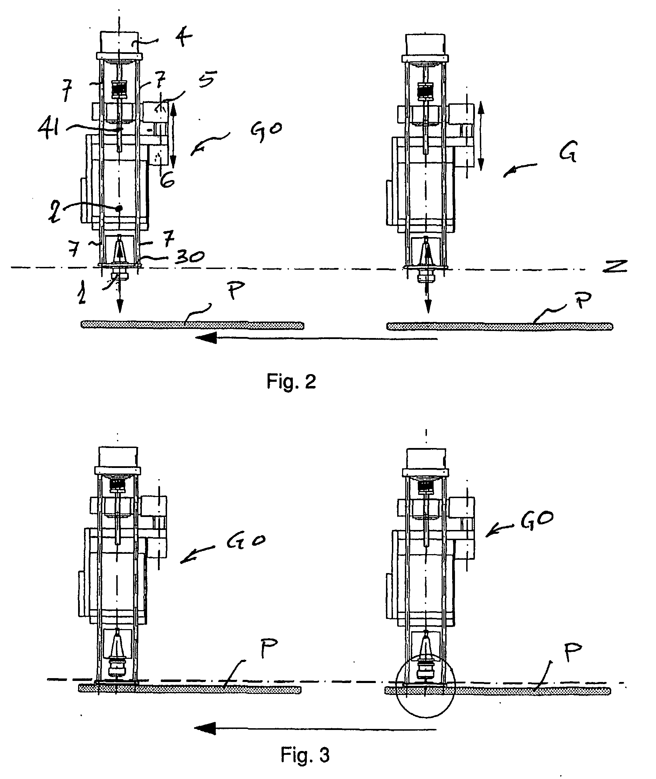

The operating system is very simple. The first step is to use the regulation system to line up the various cutting tools and sensors of the units GO according to a reference plane (Z) indicated in fig. 2. The work cycle may then be carried out by all the units (fig. 3).

The details of the work cycle may vary.

A further advantage, as shown in the illustrations, is that the sensor is annular and axial with respect to the said tool-holder unit.

This leads to increased precision and more efficient operations.

## Claims

1. Machine tool used for the working of panels of wood and wood substitutes (P) by means of rotating chip-removal tools on an axis which is orthogonal to the surface of the panel to be worked (P), which has:
- a series of heads (GO) with a vertical cutting tool, with each head having a support and drive means (2) connected to a tool-holder head (1) in order to rotate the cutting tool which is used to work the panel (P), together with a means for tracing the surface to be worked (3);
- means for synchronised, parallel movement of the said cutting heads (GO) with respect to the panel (P) to be worked;
- adjusting means for axial movement of the said tool-holder heads (1) and said tracing means (3), orthogonal with respect to the panels to be worked (P);
**characterised by** the fact that the said tool-holder head (1) and respective support means (2-6) may be adjusted axially with respect to the tracing means (5, 7, 30, 3) by means of independent adjusting device (4,41), in order to match their depths for perfectly synchronised operation during the set-up phase before starting the work cycle (Z), by varying the respective position of the tool-holder heads with respect to the said tracing means (1, 3);
and in which each of the said heads (GO) include two sub-units on a plate-type support and vertical guide (9) which are positioned axially, an upper tracer-holder unit (5-7-3-30) and a lower tool-holder unit (6, 2,1) which, by means of a worm screw means (4-41), may be moved closer or spaced away from the said coaxial sensor.

2. Machine tool according to claim 1, **characterised by** the fact that the said sensor (30) is annular-shaped (3) around the said tool-holder (1).

3. Machine tool according to the previous claim, **characterised by** the fact that:
- the said upper sub-unit (5) may be moved vertically by means of vertical movement means (8, 82, 83);
- the said upper sub-unit holds supports the said drive means with micrometric axial worm-screw regulator (4, 41) of the said lower sub-unit (6, 2), to move it closer together or further away, and holds guide rods (7) which pass through the said lower sub-unit (2) and fit on to the support (30) for the said sensor means (3), located below the said lower sub-unit (2); and
- the said tool-holder (1) is guided and passes through the said support for the said lower sensor means (3) so that:
- when the said vertical movement means (8, 82, 83) are operated, the entire unit with the said tool-holder (1) and the said sensor means (3) is moved for the work cycle.

## Patentansprüche

1. Werkzeugmaschine zur Bearbeitung von Platten von Holz und Holzersatzmitteln (P) durch rotierende Spanabhebungswerkzeuge auf einer Achse, die rechtwinklig zu der Oberfläche der zu bearbeitenden Platte (P) ist, mit:
- einer Reihe von Köpfen (GO) mit einem senkrechten Schneidewerkzeug, wobei jeder Kopf ein Stütze- und Antriebsmittel (2) aufweist, das mit einem Werkzeughalterkopf (1) verbunden ist, damit das Schneidewerkzeug rotiert, mit dem die Platte (P) bearbeitet wird, zusammen mit einem Mittel zur Verfolgung der zu bearbeitenden Oberfläche (3);
- Mitteln zur synchronisierten Parallelbewegung der Schneideköpfe (GO) in bezug auf die zu bearbeitende Platte (P);
- Einstellmittel für die axiale Bewegung der Werkzeughalterköpfe (1) und der Verfolgungsmittel (3), rechtwinklig zu den zu bearbeitenden Platten (P);
**gekennzeichnet dadurch, dass** der besagte Werkzeughalterkopf (1) und betreffende Stützmittel (2-6) axial zu den Verfolgungsmitteln eingestellt werden können (5, 7, 30, 3) mittels unabhängiger Einstellvorrichtung (4,41), um ihre Tiefen für vollkommen synchronisierten Betrieb während der Einstellungsphase anzugleichen, bevor der Arbeitszyklus (Z) gestartet wird, durch Variieren der Position des Werkzeughalterkopfs in bezug auf die Verfolgungsmittel (1, 3);
und wobei jeder der Köpfe (GO) zwei Untereinheiten auf einer plattenähnlichen Stütze und senkrechter Führung (9) umfassen, die axial plaziert sind, eine obere Fühlerhaltereinheit (5-7-3-30) und eine untere Werkzeughaltereinheit (6, 2,1) die, mittels eines Schneckenschraubenmittels (4-41), näher heran oder weg von dem koaxialen Sensor bewegt werden kann.

2. Werkzeugmaschine nach Anspruch 1, **gekennzeichnet dadurch, dass** der besagte Sensor (30) ringförmig (3) um den besagten Werkzeugbehätter (1) verläuft.

3. Werkzeugmaschine nach dem vorherigen Anspruch, durch die Tatsache **gekennzeichnet**
dass:
- die obere Untereinheit (5) mittels senkrechter Bewegungsmittel (8, 82, 83) senkrecht bewegt werden kann;
- die obere Untereinheit hält stützt das Antriebsmittel mit mikrometrischem axialem Schneckenschraubenregler (4, 41) von der unteren Untereinheit (6, 2), um ihn näher zusammen oder weiter weg zu bewegen, und hält Führungsstangen (7), die die untere Untereinheit (2) durchqueren und auf die Stütze (30) für das Sensormittel (3) passen, das sich unterhalb der unteren Untereinheit (2) befindet; und
- der Werkzeughalter (1) wird geführt und durchquert die besagte Stütze für das unteren Sensormittel (3), so dass:
- wenn die senkrechten Bewegungsmittel (8, 82, 83) betrieben werden, die ganze Einheit mit dem Werkzeughalter (1) und dem Sensormittel (3) für den Arbeitszyklus bewegt wird.

## Revendications

1. Machine-outil servant à l'usinage de panneaux de bois et substituts de bois (P) utilisant des outils tournants d'enlèvement de copeaux sur un axe perpendiculaire à la surface du panneau à usiner (P), comprenant:
- une série de têtes (GO) avec un outil tranchant vertical, chaque tête ayant un support et des commandes (2) reliés à une tête de porte-outil (1) afin de faire tourner l'outil tranchant qui est utilisé pour usiner le panneau (P), ainsi qu'un moyen pour tracer la superficie à usiner (3);
- moyen pour la synchronisation du mouvement parallèle desdites têtes tranchantes (GO) par rapport au panneau (P) à usiner;
- moyen de régulation pour le mouvement axial desdites têtes du porte-outil (1) et desdits moyens de traçage (3), perpendiculaire par rapport aux panneaux à usiner (P);
**caractérisé par le fait que** ladite tête de porte-outil (1) et les moyens de support respectifs (2 - 6) peuvent être ajustés axialement par rapport aux moyens de traçage (5, 7, 30, 3) au moyen de dispositif de régulation indépendant (4, 41), afin de faire coïncider leurs profondeurs pour une opération parfaitement synchronisée pendant la phase d'installation avant de commencer le cycle d'usinage (Z), en variant la position respective des têtes de porte-outil par rapport auxdits moyens de traçage (1, 3);
et où chacune desdites têtes (GO) incluent deux sous-unités sur une plaque de support et guide vertical (9) qui sont positionnés axialement, une unité porte-traceur située au-dessus (5-7-3-30) et une unité porte-outil située plus bas (6, 2, 1) qui, au moyen d'une vis sans fin (4 - 41), peut être rapprochée ou espacée dudit détecteur coaxial.

2. Machine-outil selon la revendication 1, **caractérisée par le fait que** ledit détecteur (30) est de forme arrondie (3) autour d udit porte-outil (1).

3. Machine-outil selon la revendication précédente, **caractérisée par le fait que** :
- ladite sous-unité supérieure (5) peut être déplacée verticalement par des moyens de mouvement vertical (8, 82. 83);
- ladite sous-unité située au-dessus supporte lesdites commandes avec régulateur micrométrique axial de vis sans fin (4, 41) de ladite sous-unité située plus bas (6, 2), pour la rapprocher ou l'éloigner, et détient des baguettes de guide (7) qui traversent ladite sous-unité inférieure (2) et se calent au support (30) pour lesdits détecteurs (3), situés en-dessous de ladite sous-unité inférieure (2); et
- ledit porte-outil (1) est guidé et passe à travers ledit support pour ledit capteur situé plus bas (3) de telle manière que:
- quand lesdits moyens de mouvement vertical (8, 82, 83) sont en fonctionnement, l'unité entière avec ledit porte-outil (1) et lesdits détecteurs (3) est déplacée pour le cycle d'usinage.
